# EUROPEAN PATENT APPLICATION

(11) **EP 1 215 600 A2**
(43) Date of publication of application: **19.06.2002**
(21) Application number: 01111688.6
(22) Date of filing: 14.05.2001
(51) Int. Cl.: G06F 17/60

(54) **Prize contest system, prize-contest information presenting method, recording medium and program signal**

(30) Priority: 11.08.2000 JP 2000245338; 19.12.2000 JP 2000385083
(71) Applicant: TSUBASA SYSTEM CO. LTD., Tokyo 136-8507 (JP)
(72) Inventor: Onoue, Masashi, c/o Tsubasa System Co., Ltd., Tokyo 136-8507 (JP)
(74) Representative: Grünecker, Kinkeldey, Stockmair & Schwanhäusser Anwaltssozietät

(57) **Abstract**

A prize contest system has user terminals (2₁-2ₘ) and a prize-offering site (3). The prize-offering site (3) has databases (5) which store prize information on prizes, an entry-accepted date and advertisement information on a sponsor of the prizes in association with one another. In response to a request made through any user terminal, the prize-offering site (3) sends prize-contest information to that user terminal using the prize information, the advertisement information and information on the entry-accepted date. With regard to ordinary entries, the prize-offering site (3) accepts only those entries which are directed to prizes of that date. With regard to those entries which have keywords shown on an advertisement medium, such as a magazine, the prize-offering site (3) permits entries for prizes whose entry-accepted dates have not come yet.

## Description

The present invention relates to a prize contest system which can present prize contests and allow entrants to enter prize contests using the Internet.

Advertisements with prizes are effective means for marketing or attracting customers, and are very popular on networks. Prize contests are generally held for some campaigns or the like with entry acceptance periods of several weeks or so.

The conventional prize contest systems that use networks have such a problem that customers, who once have visited a prize-offering site to enter a prize contest, would rarely visit the same site again. Advertisements offering prizes would not produce a large effect besides merely allowing each advertiser to gather personal information (create information on a list of names).

Services provided by a conventional prize-offering site have been uniform, that is, different or distinguished services are unavailable at it.

Accordingly, it is an object of the present invention to provide a prize contest system which tempts entrants to visit a prize-offering site repeatedly.

It is another object of the invention to construct a prize contest system which provides different or distinguished services.

It is a further object of the invention to provide a prize contest system which improves the effects of advertisements.

To achieve the objects, according to the first aspect of the invention, there is provided a prize contest system including a computer (4) connected to a network (1) and a database (5A, 5B, 5C and 5D) characterized in that the computer has capabilities of:
storing prize information on prizes in a database (5A, 5B, 5C and 5D);
setting entry acceptance periods for the prizes;
storing advertisement information on sponsors of the prizes in the database (5A, 5B, 5C and 5D) in association with the prize information; and
presenting prize-contest information using the prize information, the advertisement information and information on the entry acceptance periods in response to a request received from a terminal (2) over the network (1).

The computer (4) may determine a date on which a request for presentation of the prize-contest information from a terminal has been received, and outputs prize-contest information on prizes for those entry acceptance periods in which the determined date falls.

Further, computer (4) may output prize-contest information on a predetermined number of prizes which are included in those prizes whose entry acceptance periods expire after the date of reception of the request for presentation of the prize-contest information, and whose entry acceptance periods are close to the date of reception of the request for presentation.

The computer (4) may have first and second interfaces for providing viewers of the presented prize-contest information with entry options.

In this case, first and second interfaces may provide the viewers with the options of the number of entry items.

Further, the computer (4) may allow those viewers who have made entries through the second interface to enter a keyword, determine if the entered keyword match with a keyword previously stored in a memory and permits the entries of the viewers when there is a match, at a time of accepting the entries through the second interface.

The second interface may be capable of allowing entries for those prizes whose entry acceptance periods have not expired yet.

The computer (4) may have capabilities of:
allowing entrants to input identification information and verifying the identification information;
managing service points entrant by entrant; and
giving different service points to entrants between a case where entries are made through the first interface and a case where entries are made through the second interface.

The computer (4) may have capabilities of:
storing quiz information including question data and correct answer data for a quiz about a sponsor of prizes in the database (5A, 5B, 5C and 5D);
replying to an each entry of a prize contest made from a terminal (2) and outputting the question data in the quiz information on the sponsor of the prizes to which the entry has been made;
receiving a reply to the question data from the terminal (2); and
comparing the received reply with the correct answer data of the quiz information, and accepting the entry from the terminal (2) if it is determined that the received replay indicates the correct answer.

In this case, computer (4) may have capabilities of supplying information on the sponsor of the prizes including a hint about the quiz to the terminal (2) in at least one of a case where the reply received from the terminal (2) is requesting for a hint and a case where an answer received from the terminal (2) is determined as incorrect through comparison of the answer with the correct answer in the quiz information.

The prize information may further include address information on an address of a sponsor of prizes; and
the computer (4) has capabilities of:
acquiring information on an address of each entrant; and
extracting prize information based on the address of the entrant and outputting the prize-contest information using the extracted prize information.

Thus, it is provided a system which allows an entrant to visit the sponsor of the prize to receive the prize. Further, since the system makes a prize winner to visit a shop or the like of the sponsor of the prize, it improves the effectiveness of the advertisement relating to the sponsor of the prize.

The computer (4) may have capabilities of:
storing entrant information on each entrant in the database (5A, 5B, 5C and 5D); and
determining whether or not the entrant has made an entry so far, and, when the entrant has made an entry, reading the entrant information of the entrant from the database and using the read entrant information in inputting necessary information for a current entry.

Since this structure releases the users from input tasks, it promotes the user's motivation for accessing the prize-contest site.

The computer (4) may have capabilities of:
storing information on advertisements about advertisers in the database (5A, 5B, 5C and 5D); and
supplying information on that advertisement of an advertiser which has been designated by a user in response to a request for the advertisement from a terminal and giving a predetermined number of points to the user.

According to such the point giving service, it improves the effectiveness of the advertisement, because the users aggressively watch the advertisement.

The computer (4) may supply the terminal that has made the request with the information on the advertisement of the advertiser that has been designated by the user, together with information on a quiz about the advertisement.

To achieve the objects, according to the second aspect of the invention, there is provided a prize-contest information presenting method which is executed by a computer (4) connected to a network (1) and comprises the steps of:
storing prize information on prizes;
setting entry acceptance periods for the prizes;
storing advertisement information on sponsors of the prizes in association with the prize information; and
presenting prize-contest information using the prize information, the advertisement information and information on the entry acceptance periods in response to a request received over the network (1).

To achieve the objects, according to the third aspect of the invention, there is provided a computer (4) connected to a network (1) and a database (5A, 5B, 5C and 5D) and having capabilities of:
storing prize information on prizes in a database (5A, 5B, 5C and 5D);
setting entry acceptance periods for the prizes;
storing advertisement information on sponsors of the prizes in the database (5A, 5B, 5C and 5D) in association with the prize information; and
presenting prize-contest information using the prize information, the advertisement information and information on the entry acceptance periods in response to a request received from a terminal (2) over the network (1).

To achieve the objects, according to the third aspect of the invention, there is provided a computer readable recording medium having a program recorded therein, which executes the steps of:
storing prize information on prizes in a database (5A, 5B, 5C and 5D);
setting entry acceptance periods for the prizes;
storing advertisement information on sponsors of the prizes in the database (5A, 5B, 5C and 5D) in association with the prize information; and
presenting prize-contest information using the prize information, the advertisement information and information on the entry acceptance periods in response to a request received from a terminal (2) over the network (1).

To achieve the objects, according to the third aspect of the invention, there is provided a program signal superimposed on a carrier wave and having:
a segment which stores prize information on prizes in a database (5A, 5B, 5C and 5D);
a segment which sets entry acceptance periods for the prizes;
a segment which stores advertisement information on sponsors of the prizes in the database (5A, 5B, 5C and 5D) in association with the prize information; and
a segment which presents prize-contest information using the prize information, the advertisement information and information on the entry acceptance periods in response to a request received from a terminal (2) over the network (1).

FIG. 1 is a diagram illustrating the structure of an prize contest system according to one embodiment of the invention;
FIG. 2 is a diagram showing one example of a table of prize information database;
FIG. 3 is a diagram showing another example of a table of prize-contest entry;
FIG. 4 is a flowchart for explaining the operation of a prize-offering site;
FIG. 5 is a diagram exemplifying a top page (prize-contest information presenting screen);
FIG. 6 is a diagram exemplifying an entry-information input page;
FIG. 7 is a diagram exemplifying a keyword input page;
FIG. 8 is a diagram exemplifying a via-magazine entry screen;
FIG. 9 is a diagram exemplifying another entry-information input page (for a via-magazine entry);
FIG. 10 is a diagram showing the system configuration according to a modified embodiment of the present invention;
FIG. 11 is a diagram showing one example of quiz information;
FIG. 12 is a diagram exemplifying area data;
FIG. 13 is a diagram exemplifying an area selection screen;
FIG. 14 is a diagram exemplifying a number-of-entrants selection screen;
FIG. 15 is a diagram showing one example of an entry-information input screen on which personal information read from an entrant database is reflected;
FIG. 16 is a flowchart for explaining the system operation of a modification of the embodiment of the invention;
FIG. 17 is a flowchart of a quiz process; and

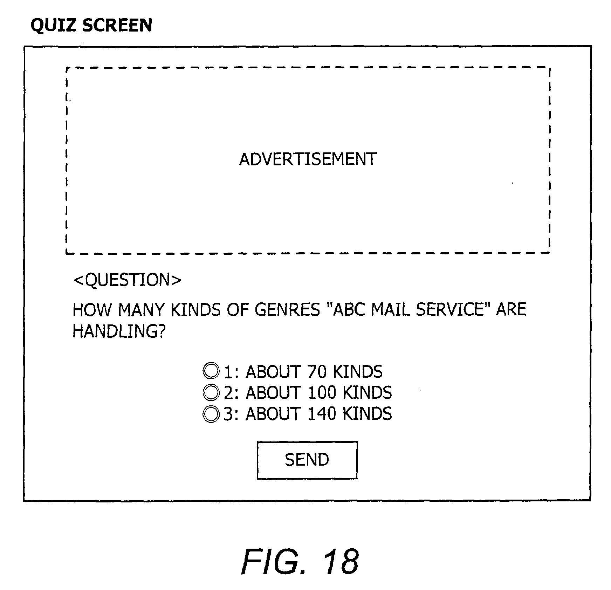

FIG. 18 is a diagram showing one example of a quiz screen.

A prize contest system according to a preferred embodiment of the present invention will now be described with reference to the accompanying drawings.

This prize contest system comprises a plurality of user terminals 2 connected to the Internet 1, and a prize-offering site 3.

The user terminals 2 are comprised of, for example, personal computers and portable terminals, such as PDA or portable telephones, which are connectable to the Internet 1 by dial-up connection.

The prize-offering site 3 has a WWW server 4, a database (DB) 5 and a mail server 6, all connected to one another.

The WWW server 4 has a CPU 41 and memory 42, provides any user terminal 2 that has accessed the WWW server 4 with the homepage of the prize-offering site 3, and accepts an access made by the operation of buttons on the homepage.

The WWW server 4 has a program for CGI (Common Gateway Interface) stored therein to properly generate a web page which suits for a request made by a user in response to the request.

The database (DB) 5 includes a prize-contest information DB 5A which stores information on a prize contest, an advertisement information DB 5B which stores advertisement information to be put on the homepage, a prize-contest entry DB 5C which stores information on an entry to a prize contest, and an entrant DB 5D which stores information on prize entrants.

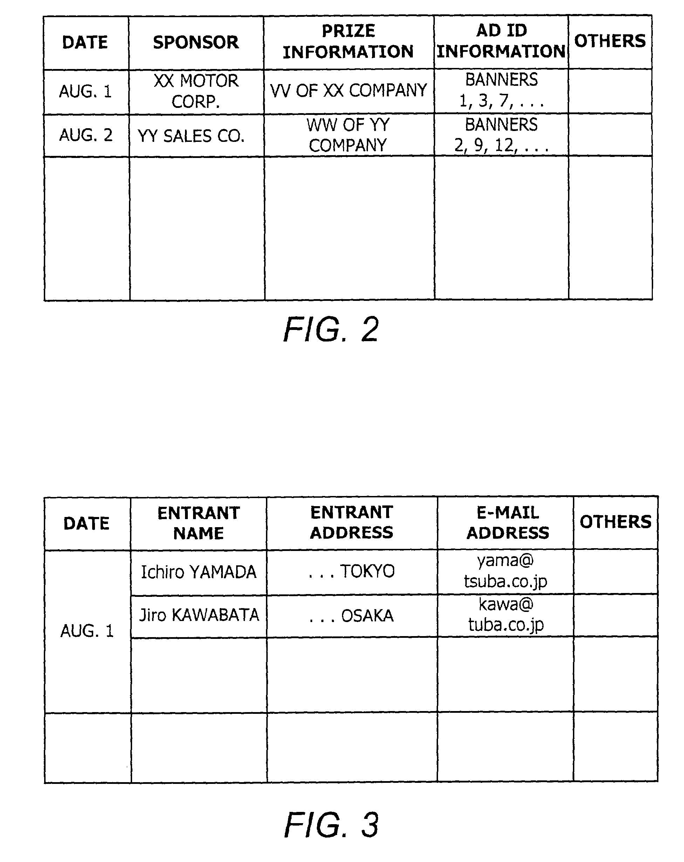

The prize-contest information DB 5A stores information on individual prize contests which is updated by a daily update process. As shown in FIG. 2, the information on each prize contest includes (1) the date of the prize contest, (2) the sponsor who offers prizes, (3) information on the prizes (text and image), and (4) advertisement identification (ID) information (e.g., information that specifies advertisement information stored in the advertisement information DB 5B).

The advertisement information DB 5B stores various advertisements (e.g., a banner advertisement) together with ID numbers.

The prize-contest entry DB 5C stores information on entrants with respect to the prize contest of each day, as shown in FIG. 3.

The entrant DB 5D accumulates personal information, such as the addresses, names, ages, sexes and e-mail addresses, entrants have registered on the Web page for prize contests that the entrants have entered on the site, and attribute information such as hobbies of individual entrants. In the case of re-entry, the stored information is renewed as needed.

The mail server 6 distributes the URL of the prize-offering site 3 (URL of the top page of the homepage provided by the WWW server 4; for example, http://www.usedcar.co.jp/present/index.html) to the user terminals 2 of an unspecified number of network viewers (or their mail boxes) by referring to a news group, a mail magazine, a mailing list or the like. Each viewer can access the prize-offering site 3 using a Web browser and this URL.

Advertisements on the prize-offering site 3 are published on magazines or the like that are periodically (or regularly) published. Keywords are previously set for the individual advertisements and are printed in such a way that the keywords can be seen only by those people who buy such magazines. For example, the keywords may be printed inside the double-leaved part or covered with seal films which magazine buyers should scratch off using coins or the like. The keywords are stored in the WWW server 4 in accordance with the publication periods of the magazines.

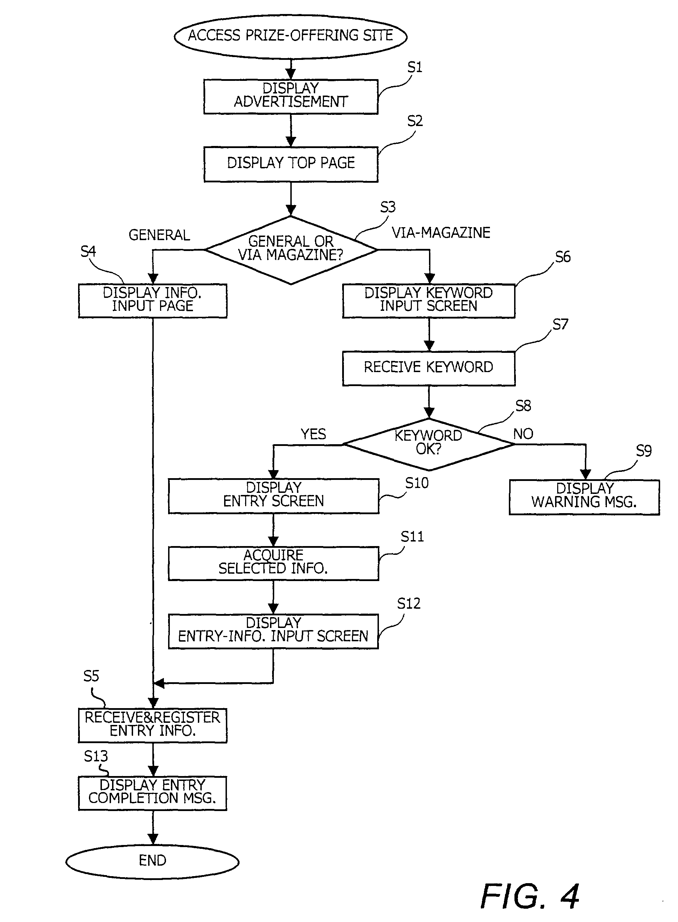

The operation of the prize contest system will now be discussed with reference to FIGS. 4 to 9.

The mail server 6 distributes the URL of the prize-offering site 3 to the user terminals 2 of an unspecified number of network viewers (or their mail boxes) by referring to a news group, a mail magazine, a mailing list or the like. The mail server 6 also puts advertisements on regular publications to distribute the URL of the prize-offering site 3. When a person who becomes interested in the prize-offering site 3 or who knows the prize-offering site 3 accesses the prize-offering site 3 based on the distributed information, the WWW server 4 discriminates the date of the access using an internal timer or the like. For that prize to whose entry acceptance date the discriminated date belongs, the WWW server 4 discriminates advertisement information on the sponsor of that prize based on the contents of the prize-contest information DB 5A, and reads the advertisement information from the advertisement information DB 5B. Based on the read advertisement information, the WWW server 4 prepares an advertisement to be displayed, supplies the prepared advertisement to the accessing user terminal 2 and displays it thereon (step S1). This advertisement information may be a large still picture displayed for several seconds or may be multimedia data, such as a video clip, displayed.

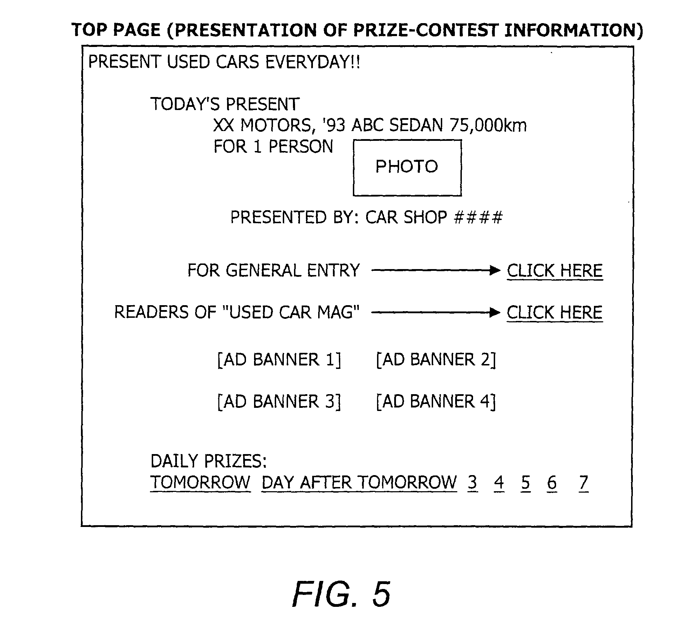

When the display of the advertisement is completed, the WWW server 4 prepares the top page that is shown in FIG. 5 (prize-contest information presenting screen) based on information registered in the prize-contest information DB 5A and advertisement information DB 5B, supplies the top page to the accessing user terminal 2 and displays it thereon (step S2).

As shown in FIG. 5, the top page (Web page) includes information and an advertisement of the advertiser, information on a prize, a "GENERAL ENTRY" button and "VIA-MAGAZINE ENTRY" button which specify the type of the entry, and a button for calling up a list of subsequent prizes. According to the present system, the entry types are the "general entry" that allows general entrants to make an entry and the "via-magazine entry" that allows buyers or the like of predetermined magazines or the like to make an entry using a keyword.

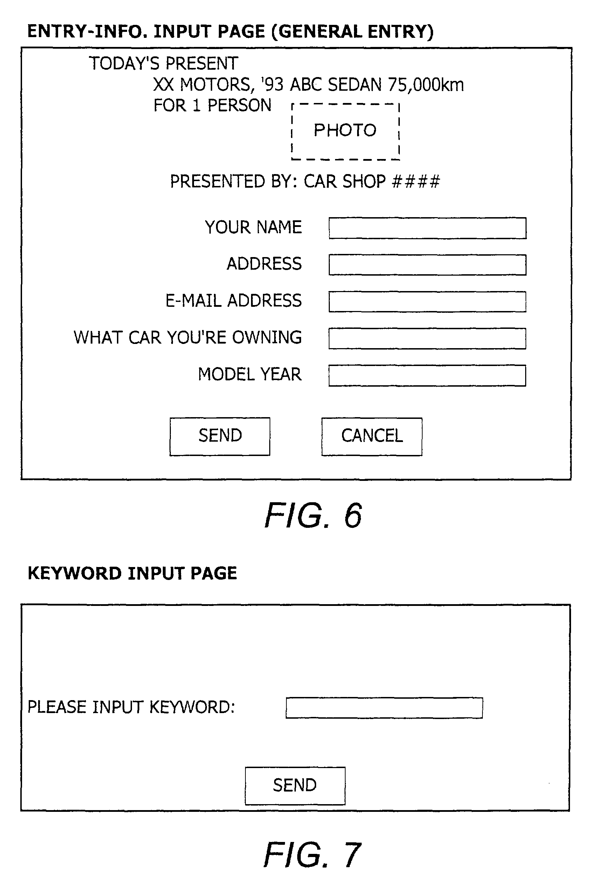

When a user clicks the "GENERAL ENTRY" button on the Web page displayed on the user terminal 2, the WWW server 4 is notified of that event. The WWW server 4 determines which entry type has been selected (step S3). When the WWW server 4 discriminates the general entry, the WWW server 4 provides the accessing user terminal 2 with an entry-information input page, as shown in FIG. 6, for entering a prize contest and displays the page on the user terminal 2 (step S4). The entry-information input page serves as an interface between a user who wants to enter a prize contest and the prize-offering site 3. The entry-information input page includes information for specifying each entrant, such as the name, address and e-mail address, and check items (questionnaires or the like) about information in which the prize-offering sponsor is interested. The entry-information input page also has prize ID information set as non-display form items, such as <INPUT NAME="PRESENT-ID" TYPE=hidden VALUE="1234">.

When the user (entrant) fills up the necessary information on the entry-information input page and clicks a "SEND" button, the form transmitting function of HTML sends the input data to the WWW server 4. At this time, form transmission data including prize ID information (e.g., "PRESENT-ID=1234" or the like), which is acquired from non-display form items provided in the page (e.g., <INPUT NAME="PRESENT-ID" TYPE=hidden VALUE="1234"> or the like), is sent to the WWW server 4.

The WWW server 4 receives those information (entry information), adds the received entry information into the prize-contest entry DB 5C and registers information on the entrant (name, address, hobby, subjects of interests, etc.) in the entrant DB 5D (step S5). When there is a person with the same name and address as those of the entrant, the information in the entrant DB 5D should be updated as needed.

When a user clicks the "VIA-MAGAZINE ENTRY" button on the top page in FIG. 5, on the other hand, the WWW server 4 is notified of that event. Then, the WWW server 4 synthesizes a keyword input screen shown in FIG. 7 using CGI, supplies the screen to the accessing user terminal 2 and displays it thereon (step S6).

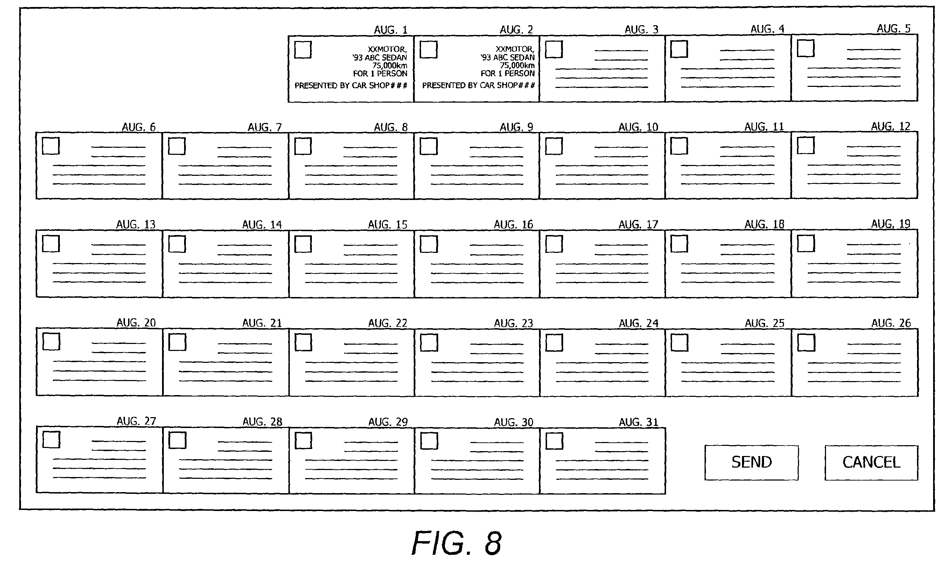

If the user has the latest issue of a regularly-issued publication on which the advertisement about the prize-offering site 3 is written and knows a keyword effective at that period, the user could enter the keyword. When the user clicks the "SEND" button, the input keyword data is sent to the WWW server 4. The WWW server 4 receives the keyword (step S7) and checks the received keyword (step S8). When the received keyword does not match with the one stored in a data file, a warning message such as "Wrong keyword" is sent to and displayed on the user terminal 2 (step S9). When the received keyword matches with the prestored one, the WWW server 4 synthesizes an entry screen (Web page) for a via-magazine entry as shown in FIG. 8, sends the screen to the user terminal 2 and displays it thereon (step S10).

The Web page for via-magazine entry shows a calendar as shown in FIG. 8. The dates that are shown on the calendar indicate the dates of prize contests which can be entered at a time in the current access. In other words, while the "general entry" permits an entry to prize contests of the date of the access, the "via-magazine entry" permits an entrant to enter a set of prize contests for those dates that are shown on the calendar (from August 1 that is the day of the access to January in the illustrated example). This is a distinguished service for the buyers of the associated magazine.

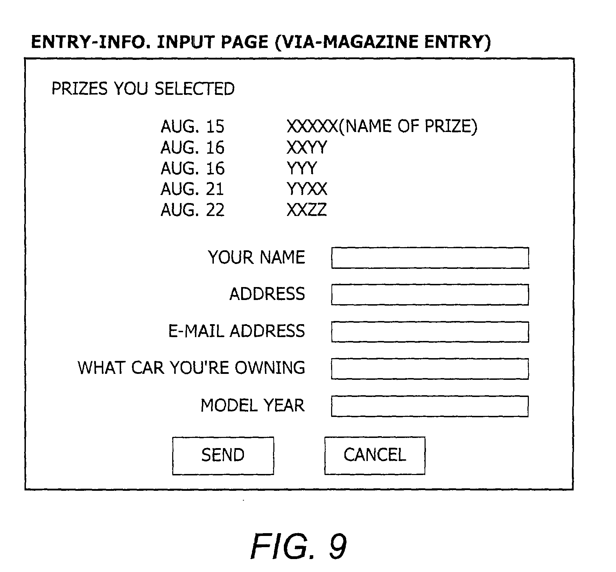

The box of each day on the calendar shows information of a prize contest presented that day and a check box. Each user checks the check box for each desired prize contest. Upon completion of the selection of a prize contest or prize contests (i.e., the selection of a date or dates), the user clicks the "SEND" button. In response to this manipulation, the associated user terminal 2 sends information of the checked date to the WWW server 4. The WWW server 4 receives the information selected by the user from the user terminal 2 (step S11), synthesizes an entry-information input page as shown in FIG. 9 based on the selected information received, sends the page to the user terminal 2 and displays it on the browser (step S12).

The entry-information input page shows the date of the prize contest or the dates of the prize contests that the user has selected, a list of prizes and an input column for inputting personal information on the entrant. When finishing inputting the personal information, the user clicks the "SEND" button to send the entry information to the WWW server 4. Note that the Web pages discussed above serve as an interface between the prize-offering site and each user.

The WWW server 4 receives the entry information from each user terminal 2 and registers the information of that entrant in the prize-contest entry DB 5C for each of the selected dates (step S5). When one user has selected the prize contests of August 1 and August 2, for example, the WWW server 4 registers the name, address, e-mail address and so forth input by that user in the columns of August 1 and August 2 in the prize-contest entry DB 5C. Further, the WWW server 4 registers (or updates) information on that entrant in the entrant DB 5D. Finally, the WWW server 4 displays a message screen, such as "Thank you for the entry. Please come again for another entry." (step S13) and then terminates the process.

The WWW server 4 draws lots every day for that prize contest whose entry acceptance date corresponds to the previous day to decide a winner or winners, and puts a Web page which announces the winner or winners together with advertisement information of the prize-offering sponsor. The WWW server 4 also informs the mail server 6 of the name, address and so forth of each winner. The mail server 6 informs each winner of the URL of the Web page that announces winners by e-mail.

According to this embodiment, as described above, prize contests are set every day, so that people who are interested in prize contests and/or prizes are likely to frequently visit this site.

With regard to the "general entry", each entrant is allowed to enter a prize contest of the visiting day alone, so that people who are interested in prizes are likely to visit this site every day. This increases the amount of accesses to this site and the advertisements that are given on this site.

Further, the "via-magazine entry" can set the number of prize contests that can be entered greater than that of the "general entry" as a privilege to buyers of an associated magazine. This contributes to increasing the sales of such magazines.

The aforementioned synergetic effects can increase the amount of accesses to advertisements significantly.

Furthermore, the results of analysis of the contents of the entrant DB 5D can be used in sending direct mails or the like.

The invention is not limited to the above-described embodiment but may be modified or adapted in various other forms.

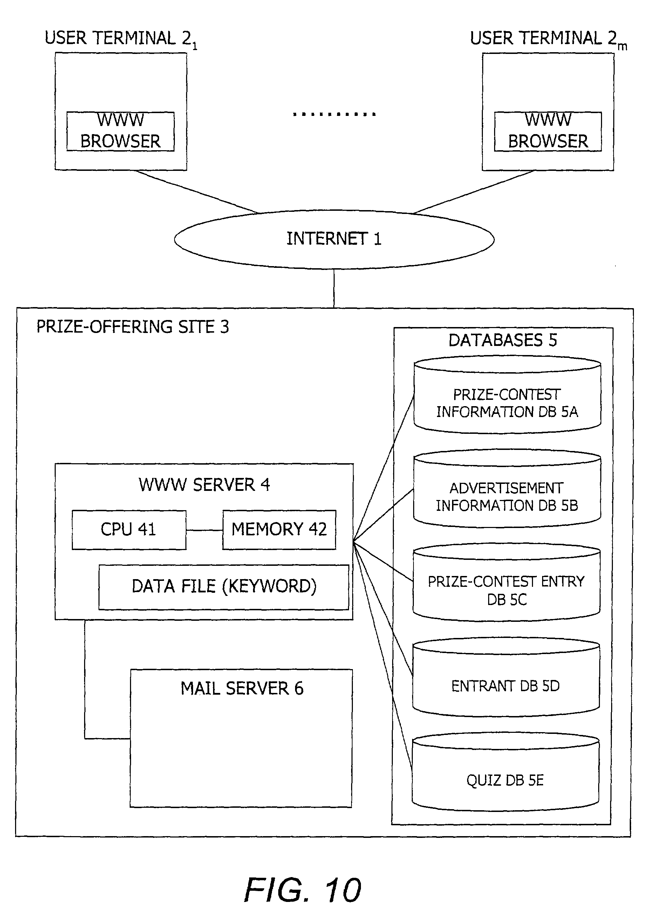

For example, to further improve the advertising effect, a quiz on the prize-offering sponsor may be given at the time of entering a prize contest. In this case, the prize contest system further has a quiz DB 5E in the database 5, as shown in FIG. 10, which stores quiz information about a quiz on each prize-offering sponsor, the advertising homepage of each prize-offering sponsor and so forth.

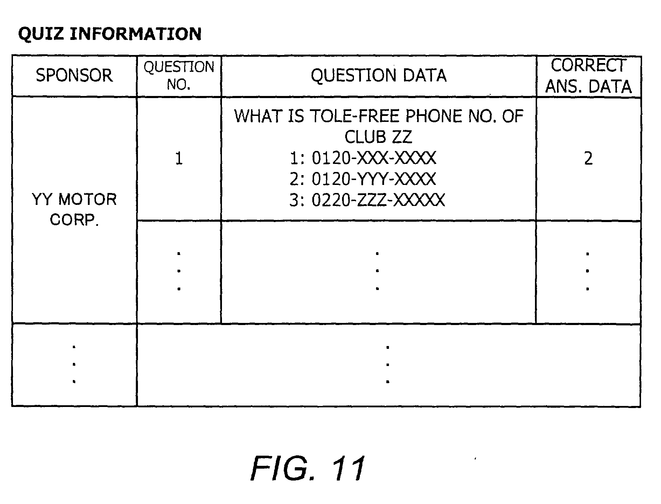

Quiz information includes question data and correct answer data for each prize-offering sponsor in association with each other, for example, as shown in FIG. 11. To improve the advertising effect, a question should be about the prize-offering sponsor. Further, the advertising homepage of each prize-offering sponsor gives information about the correct answer to each question.

At the time of accepting an entry to a prize contest, the WWW server 4 reads quiz information of the associated prize-offering sponsor from the quiz DB 5E, sequentially supplies the display screen of question data to the user terminal 2 that has accessed the prize-offering site 3 and check an answer to each question. When the answer is incorrect or a hint is requested, the WWW server 4 reads an advertising homepage of the associated prize-offering sponsor from the quiz DB 5E and sends the homepage to the user terminal 2. When answering all the questions about the prize-offering sponsor registered in the quiz DB 5E is completed, the WWW server 4 performs registration or the like of the entry information received from the user and terminates the acceptance of the entry.

Giving a quiz on the prize-offering sponsor at the time an entrant enters a prize contest can improve the effect of advertising the prize-offering sponsor. A further advertising effect can be obtained by supplying the user with the advertising homepage of the prize-offering sponsor where answers or the like to the quizzes are given.

A synthesized screen of the homepage for an advertisement and question data may be supplied to the user terminal 2 so as to initially present the advertising homepage.

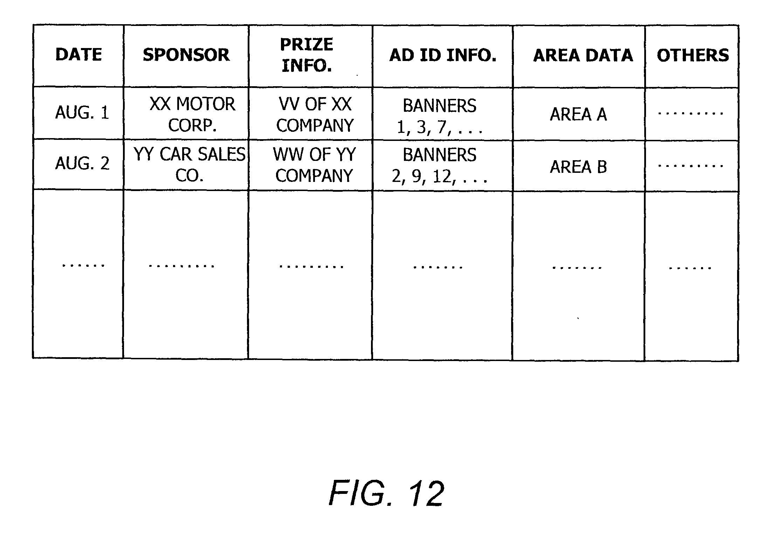

Further, this prize contest system may be adapted as the system that works on the premise that a winner should come to the shop of a prize-offering sponsor to pick up a prize. In this case, information (prize-contest information) on a prize contest which is stored in the prize-contest information DB 5A further has area data which indicates the area where the prize-offering sponsor lives, as shown, for example, in FIG. 12.

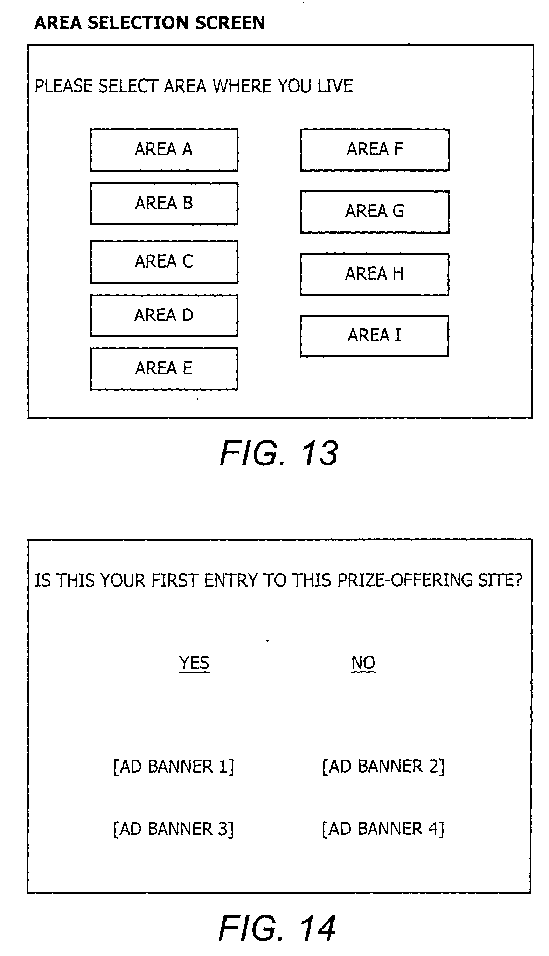

At the time of accepting an entry to a prize contest, the WWW server 4 supplies the user terminal 2 with an area selection screen as shown, for example, in FIG. 13, which allows an entrant to select a residential area. When the entrant makes selection of the residential area, the WWW server 4 extracts the prize-contest information that includes the selected area as area data from the prize-contest information DB 5A, prepares the screen to accept an entry to a prize contest as shown, for example, in FIG. 5, and displays the screen on the user terminal 2.

As apparent from the above, this system allows the entrant to input the residential area at the time of entering a prize contest and supplies prize-contest information of the prize-offering sponsor who lives in the same residential area to the entrant's user terminal 2. The system realized can therefore allow the winner of each prize contest to directly go to the shop of the prize-offering sponsor to pick up the prize. This feature certainly contributes to improving the effect of advertising the prize-offering sponsor. The feature of direct pickup of a prize at the place of the prize-offering sponsor also eliminates the transportation or the like of the prize that has been essential in the prior art. This can relieve some burden on each prize-offering sponsor.

In the case where a user tries to enter a prize contest again, the information of the user that has been registered before may be called up and used to eliminate the redundant a re-entry operation by the user. For example, at the time of accepting an entry to a prize contest, the WWW server 4 supplies the user terminal 2 with an input screen (number-of-entries selection screen) to prompt the entrant to specify whether it is the first entry to the prize-offering site (YES) or the second or later entry (NO), as shown in FIG. 14.

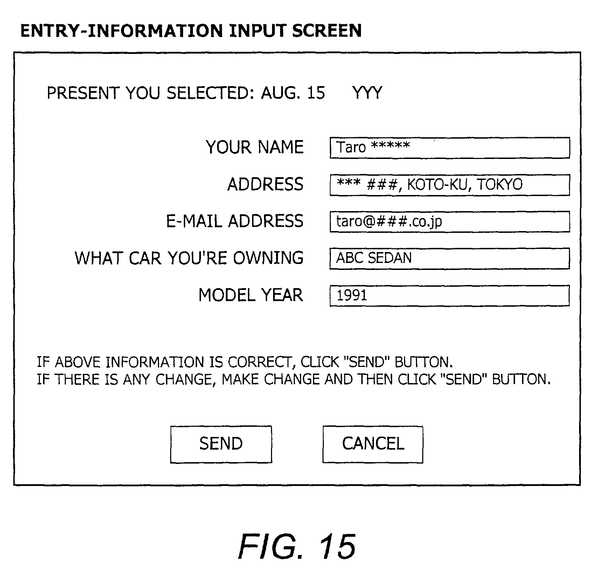

When the entrant selects "NO" on the number-of-entries selection screen, the WWW server 4 accepts further inputs, such as the name and e-mail address. Next, the WWW server 4 reads personal information, attribute information and so forth which correspond to the input data from the entrant DB 5D. Then, the WWW server 4 supplies the user terminal 2 with an entry-information input screen which reflects the read personal information, etc. on the individual input columns as shown, for example, in FIG. 15, thus allowing the user to check the contents of the entry and the registered contents such as personal information. At this time, the user can correct the registered contents such as personal information on the entry-information input screen.

The WWW server 4 receives the input data (entry information) from the user terminal 2, and compares the data with the associated personal information, etc. registered in the entrant DB 5D to check if there is any correction that should be made. If there is any such correction, the WWW server 4 updates the corresponding registered contents in the entrant DB 5D. Based on the entry information, the WWW server 4 registers the information or the like on the entrant in the prize-contest entry DB 5C.

When the entrant has specified on the number-of-entries selection screen that it is the first entry (YES), the WWW server 4 supplies the user terminal 2 with an entry-information input page (see FIG. 6) with blank input columns, accepts inputs, such as personal information and registers the necessary data in the prize-contest entry DB 5C and the entrant DB 5D based on the input information.

In short, for any user who has made a re-entry to a prize contest, the entry-information input page that has old registered personal information, attribute information and so forth shown in the respective input columns is supplied to the user terminal 2. This can relieve each user of the burden of re-entering such information to be registered and can tempt the user to visit the prize-offering site again.

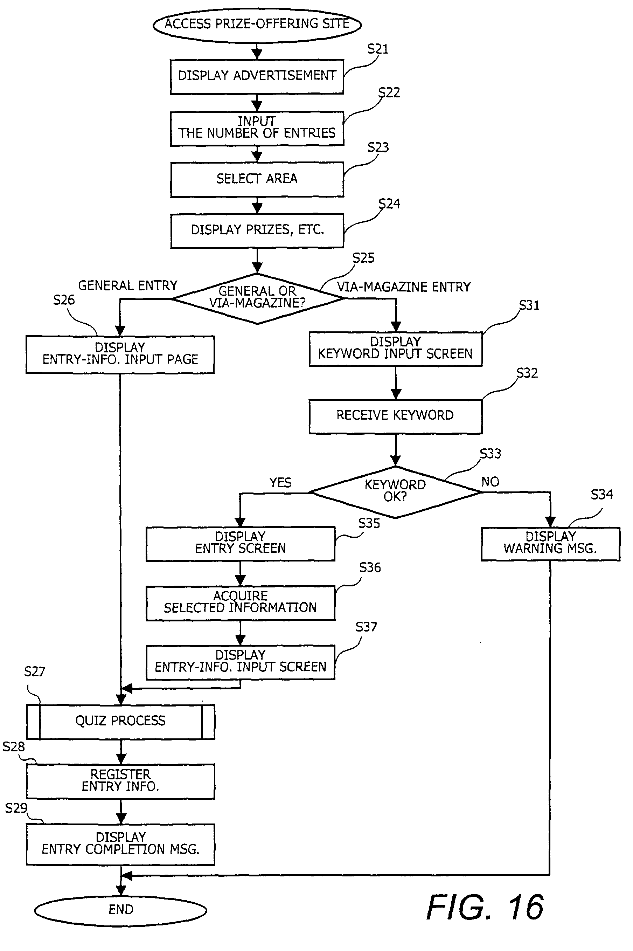

Referring now to FIG. 16, a description will be given of the operation of a prize contest system which further has a capability of presenting a quiz about a prize-offering sponsor and a capability of selecting prizes in accordance with the residential area of each user.

First, when a user makes an access to the prize-offering site 3, the WWW server 4 discriminates the date of the access using the internal timer or the like, then discriminates advertisement information on the sponsor of that prize to whose entry acceptance date the discriminated date belongs, based on the contents of the prize-contest information DB 5A, reads the advertisement information from the advertisement information DB 5B, prepares an advertisement to be displayed, and supplies the prepared advertisement to the accessing user terminal 2 to display it thereon (step S21).

When the display of the advertisement is finished, the WWW server 4 supplies the user terminal 2 with the entry-information input screen as shown, for example, in FIG. 14 to prompt the user to specify whether or not it is the first entry (S22). When the user specifies that the entry is not the first one, the user is further asked to input information, such as the name and e-mail address, for specifying the user.

Next, the WWW server 4 provides the accessing user terminal 2 with the area selection screen as shown, for example, in FIG. 13, accepts the selected input on the residential area and extracts prize-contest information which includes that area as area data from the prize-contest information DB 5A (step S23). Then, the WWW server 4 generates a screen (prize-display screen) which includes prize information, an advertisement, the buttons ("GENERAL ENTRY" button and "VIA-MAGAZINE ENTRY" button) which specify the type of the entry, and so forth, as shown, for example, in FIG. 5, and supplies the screen to the user terminal 2 (step S24). When the user clicks the "GENERAL ENTRY" button or the "VIA-MAGAZINE ENTRY" button on the prize-display screen, the WWW server 4 is informed of that event and determines which type of entry has been selected (step S25).

When the "GENERAL ENTRY" button has been selected, for example, the WWW server 4 refers to the information on the number of entries by the entrant that has been input in step S22. When it is the first entry, the WWW server 4 supplies the entry-information input page as shown in FIG. 6 to prompt the entrant to input the necessary items to the user terminal 2 and displays it thereon (step S26). The user or entrant inputs the necessary items on the entry-information input page displayed on the user terminal 2 and clicks the "SEND" button. In response to the click action, the user terminal 2 sends the input data to the WWW server 4.

If it is the second or later entry, on the other hand, the WWW server 4 uses the previously input name, e-mail address and so forth as a key, reads personal information or the like corresponding to the key information, prepares the entry-information input page using the read information and sends the page to the user terminal 2 (step S26). The user checks the contents of the entry-information input page displayed on the user terminal 2, makes corrections to the input data wherever necessary and clicks the "SEND" button. The user terminal 2 in turn sends the input data to the WWW server 4.

Upon reception of the input data on the entry-information input page from the user terminal 2, the WWW server 4 temporarily stores the input data in a predetermined memory area and then executes a quiz process to give a quiz about the prize-offering sponsor to the entrant (step S27).

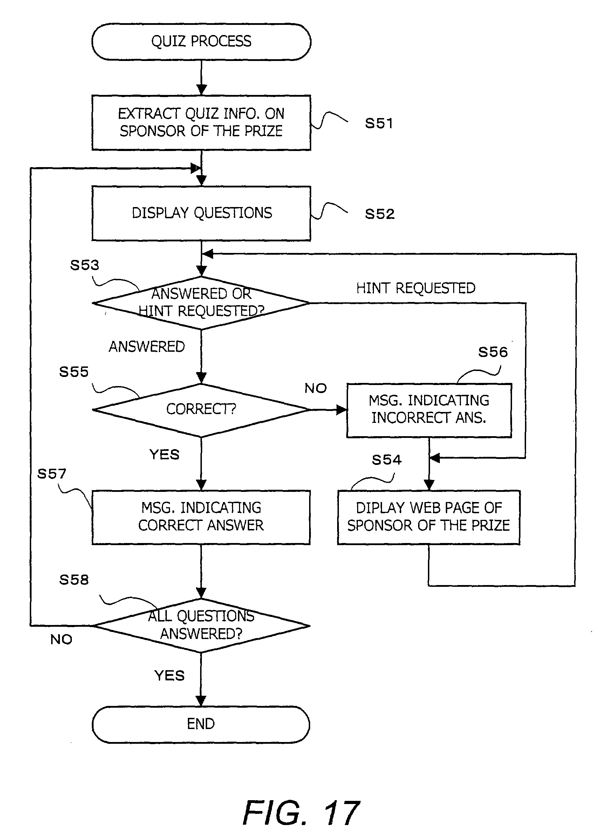

FIG. 17 illustrates the flowchart of the quiz process. First, the WWW server 4 extracts quiz information on the prize-offering sponsor from the quiz DB 5E (step S51). Then, the WWW server 4 sends question data to the associated user terminal 2 (step S52) and determines whether data received from the user terminal 2 is an answer or a hint request (step S53).

When the received data is a hint request, the WWW server 4 supplies the user terminal 2 with the homepage that advertises the prize-offering sponsor (step S54) and accepts an answer or the like again.

When the received data is an answer, the WWW server 4 refers to correct answer data for the question and determines if the received answer is correct (step S55). When the answer is wrong, the WWW server 4 sends a message notification to that effect to the user terminal 2 and supplies the user terminal 2 with the homepage that shows a hint (steps S56 and S54). Then, the WWW server 4 accepts an answer again. When the answer is correct, the WWW server 4 sends a message to that effect to the user terminal 2 (step S57).

The WWW server 4 executes a sequence of processes of the steps S52 to S57 until all the questions are answered (step S58). When every question is answered, the WWW server 4 terminates the quiz process and returns to the main routine.

Upon completion of the quiz process, the WWW server 4 registers the entry information, temporarily stored in the predetermined memory area, in the prize-contest entry DB 5C. The WWW server 4 also registers information or the like about the entrant in the entrant DB 5D. When the information on the entrant has already been registered, the WWW server 4 compares the contents of both information with each other and updates the registered information if there is any change in the items (step S28). Then, the WWW server 4 sends an entry completion message to the user terminal 2 (step S29) and terminates this process.

When the entrant has selected the "VIA-MAGAZINE ENTRY" on the prize-display screen, on the other hand, the WWW server 4 is notified of that event. Then, the WWW server 4 synthesizes the keyword input screen shown in FIG. 7 using CGI, supplies the screen to the associated user terminal 2 and displays it thereon (step S31). In this case, the user has the latest issue or the like of the magazine on which the advertisement on the prize-offering site 3 is placed and enters the keyword that is acquired from that magazine through the user terminal 2. The user terminal 2 sends the input keyword data to the WWW server 4 and the WWW server 4 receives the keyword (step S32).

The WWW server 4 checks the received keyword (step S33). When the received keyword does not coincide with the one stored in the data file, the WWW server 4 sends an alert message to the user terminal 2 and displays it thereon (step S34). When the received keyword is correct, the WWW server 4 synthesizes a via-magazine entry screen as shown in FIG. 8, and supplies the user terminal 2 with the screen (step S35). At this time, information on prizes of individual days that are displayed on the entry screen is the prize-contest information that has been extracted based on the residential area selected by the entrant.

In the case of this via-magazine entry, the entrant can enter prize contests for a plurality of days at a time, so that the user terminal 2 sends information on the dates selected as the entry targets (selected information) to the WWW server 4. The WWW server 4 receives the selected information from the user terminal 2 (step S36). Next, the WWW server 4 refers to the information on the number of entries of the entrant that has been input in step S22. When it is the first entry, the WWW server 4 prepares the entry-information input page for allowing the user to input the necessary items as shown in FIG. 9 based on the received selected information, supplies the page to the user terminal 2 and displays it thereon (step S37). The user fills in the items, where necessary, on the entry-information input page displayed on the user terminal 2 and clicks the "SEND" button. In response to the click action, the user terminal 2 sends the input data to the WWW server 4.

If it is the second or later entry, the WWW server 4 uses the previously input name, e-mail address, etc. as a key, reads personal information or the like corresponding to the key information, prepares the entry-information input page using the read information and sends the page to the user terminal 2 (step 537). The user checks the contents of the entry-information input page displayed on the user terminal 2, corrects the input data wherever necessary and clicks the "SEND" button. In response to the click action, the user terminal 2 sends the input data to the WWW server 4.

Upon reception of the input data on the entry-information input page from the user terminal 2, the WWW server 4 temporarily stores the input data in a predetermined memory area and then executes the quiz process to give a quiz about the prize-offering sponsor to the entrant (step S27).

When the quiz process is finished, the WWW server 4 registers the entry information, temporarily stored in the predetermined memory area, in the prize-contest entry DB 5C. The WWW server 4 also registers information or the like about the entrant in the entrant DB 5D. When the information on the entrant has already been registered, the WWW server 4 compares the contents of both information with each other and updates the registered information if there is any change in the items (step S28). Then, the WWW server 4 sends a completion message to the user terminal 2 (step S29) and terminates this process.

In the flowchart shown in FIG. 16, the user is prompted to select the residential area on the area selection screen in step S23. For that user whose entry is the second or later one, however, the associated area may be specified from the address in the personal information of the user and prize information corresponding to that area may be presented.

The quiz process in the case of the via-magazine entry may give a quiz on a prize-offering sponsor who is selected at random from plural prize-offering sponsors, or may give a quiz on a prize-offering sponsor who is selected by the user, or may give a quiz on all the prize-offering sponsors.

According to the above-described embodiment, upon every access by a user terminal 2, the WWW server 4 generates the homepage of a target sponsor using CGI. As a modification, top pages and entry pages may be prepared beforehand prize by prize and those pages may be stored in the prize-contest information DB 5A in a linked fashion, so that when any user terminal 2 accesses the prize-offering site 3, the WWW server 4 reads the associated pages from the prize-contest information DB 5A and provides the user terminal 2 with the pages. To take seriously the rules that a prize contest is given every day and an entry to each prize contest can be made only on the date of that contest, however, it is desirable to dynamically prepare and display a homepage, an entry page and so forth by CGI or the like.

Although the foregoing description of the embodiment has been given of the case where a prize contest is held every day, the frequency of holding a prize contest is arbitrary. For example, a prize contest may be held once every two days or once a week.

The foregoing description of the embodiment has been given of the case where an entrant can enter prize contests for one month through the via-magazine entry. The entries may be ranked in such a way that each entrant can enter prize contests for one month for a monthly magazine, can enter prize contests for one week for a weekly magazine, and can enter prize contests for several days for a daily publication. Further, a point which indicates the number of prize contests that one can enter at a time may be given so that points of different values are given in accordance with the types of the entries.

Although a keyword is used to verify that an entrant is the buyer of an associated magazine in the case of the via-magazine entry, a URL exclusive for the via-magazine entry may be recorded on a magazine and plural entries may be accepted for an access to that URL (a password may be requested).

The entrant DB 5D may be provided with a point managing capability to manage the points for each entrant, so that a point is given to the entrant according to the entry to a prize contest. Information on the points each entrant has may be stored and the accumulated points may be treated as exchangeable with some sort of prize or service. In this case, different service points may be given between the general entry and the via-magazine entry.

Another means may be provided to permit a user to acquire a service point which is exchangeable with a prize or service. For instance, a user may acquire some points by answering a quiz about an advertiser. In this case, the WWW server 4 has advertisement data including a hint for a question, question data and correct answer data for each advertiser. To receive the point supply service, a user should complete a predetermined membership registration and store membership information (member ID, password, name, address, accumulated points, etc.) in the database 5.

After verifying the membership in accordance with, for example, the access to the site that provides a service point, the WWW server 4 supplies the user terminal 2 with an advertiser selection screen for prompting the user to select a desired advertiser. When the user selects one advertiser, the WWW server 4 reads question data about the advertiser, advertisement data, correct answer data and so forth from the database 5, generates a quiz screen containing questions and an advertisement and supplies the screen to the user terminal 2. Viewing the advertisement on the quiz screen displayed on the user terminal 2, the user selects the one of suggested answers for each question that the user thinks correct. The user terminal 2 sends data of the selected and input answer to the WWW server 4.

When the answer received from the user terminal 2 is correct, the WWW server 4 adds a predetermined value of points as points to be supplied to the user. When the answer is incorrect, no points are added. This point adding process is repeated for each question about the designated advertiser. When every question is answered or an end request is received from the user, the WWW server 4 supplies the user terminal 2 with a screen or the like which shows the total value of the supplied points, displays the screen on the user terminal 2, specifies the corresponding membership information in the database 5 and adds the currently supplied points to the accumulated points. This allows the user to positively see the advertisement on the advertiser in order to acquire some points, so that the advertisement effect can be improved.

The point value to be supplied may differ advertiser by advertiser, or a predetermined number of points may be specially given to a user who has given the correct answer to every question, a user who has answered all the questions or the like.

Each user may be able to obtain a service point every time he or she watches an advertisement. In this case, the WWW server 4 supplies the user terminal 2 with the advertiser selection screen for prompting the user to select a desired advertiser, and when the user selects one advertiser, the WWW server 4 reads advertisement data or the like about the advertiser and sequentially supplies the data to the user terminal 2. After viewing the advertisement displayed on the user terminal 2, for example, the user may click an advertisement request button for requesting the display of the next advertisement. In accordance with this event, the user terminal 2 informs the WWW server 4 of the clicking of the advertisement request button. In turn, the WWW server 4 supplies the next advertisement data to the user terminal 2 and adds points to be supplied to the user. When viewing every advertisement data is completed or upon reception of an end request from the user, for example, the WWW server 4 may add the currently acquired points to the number of accumulated points of the associated membership information in the database 5.

Although the foregoing description of the embodiment has been given of the case where prizes for one week of prize contests can be viewed (see the top page in FIG. 5) in the case of the general entry, the invention is not limited to this particular case but the number of prizes viewable at a time is arbitrary. It is however desirable that the number of prizes viewable at a time should be less than the number of prizes viewable at a time in the case of the via-magazine entry (one month of prize contests in the above-described embodiment). This is to permit general entrants to access the prize-offering site.

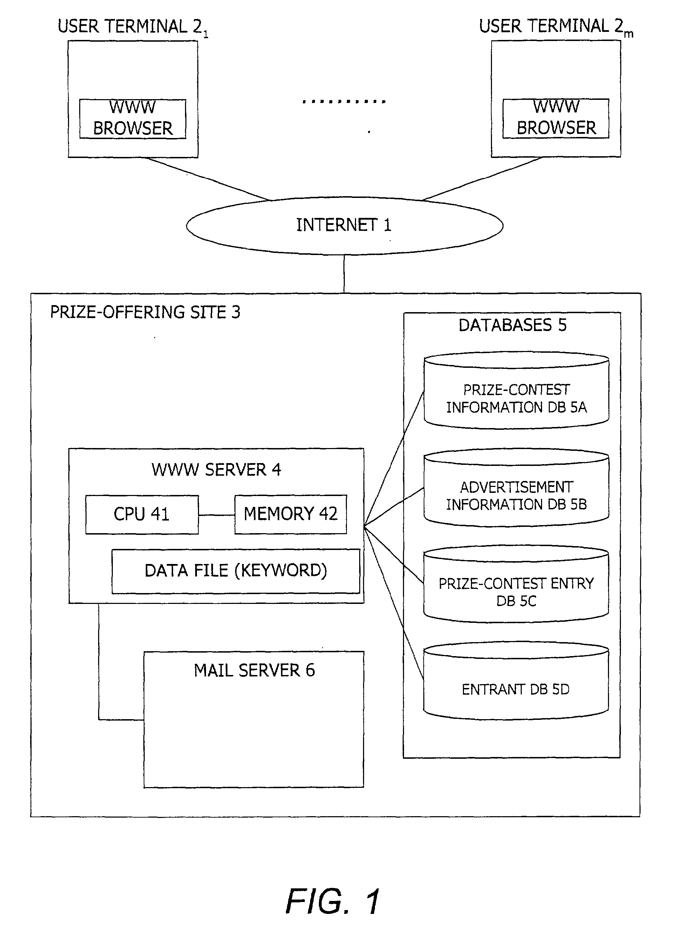

The structure of the prize-offering site 3, the structure of each database and the table structure of the database as shown in FIG. 1, and the like can be changed as needed. Instead of the Internet 1, a closed network such as a private network may be used as well.

At the time of registering information on a prize contest in the prize-contest information DB 5A, the day on which the prize contest is to be held (entry acceptance date) is not limited to one day but an arbitrary period can be set for any prize contest.

In short, according to the embodiment, it is expected that lots of customers can gather continuously, thus providing a significant advertisement effect. Therefore, each advertiser (prize-offering sponsor) can expect to receive the effect which matches with high-price prizes. As a prize contest for a high-price prize can be held every day, one can expect that entrants will visit the site repeatedly.

Further, the service to be provided may be changed depending on the route (the general entry or the via-magazine entry) to the prize-offering site 3.

This application is based on Japanese Patent Application No. 2000-245338 filed on August 11, 2000 and Japanese Patent Application No. 2000-385083 filed on December 19, 2000, and including specification, claims, drawings and summary. The disclosure of the above Japanese Patent Application is incorporated herein by reference in its entirety.

## Claims

1. A prize contest system including a computer (4) connected to a network (1) and a database (5A, 5B, 5C and 5D) **characterized in that** said computer has capabilities of:
storing prize information on prizes in a database (5A, 5B, 5C and 5D);
setting entry acceptance periods for said prizes;
storing advertisement information on sponsors of said prizes in said database (5A, 5B, 5C and 5D) in association with said prize information; and
presenting prize-contest information using said prize information, said advertisement information and information on said entry acceptance periods in response to a request received from a terminal (2) over said network (1).

2. The prize contest system according to claim 1, **characterized in that** said computer (4) determines a date on which a request for presentation of said prize-contest information from a terminal has been received, and outputs prize-contest information on prizes for those entry acceptance periods in which said determined date falls.

3. The prize contest system according to claim 2, **characterized in that** said computer (4) outputs prize-contest information on a predetermined number of prizes which are included in those prizes whose entry acceptance periods expire after said date of reception of said request for presentation of said prize-contest information, and whose entry acceptance periods are close to said date of reception of said request for presentation.

4. The prize contest system according to claim 1, **characterized in that** said computer (4) has first and second interfaces for providing viewers of the presented prize-contest information with entry options.

5. The prize contest system according to claim 4, **characterized in that** said first and second interfaces provide the viewers with the options of the number of entry items.

6. The prize contest system according to claim 1, **characterized in that** said computer (4) allows those viewers who have made entries through said second interface to enter a keyword, determine if said entered keyword match with a keyword previously stored in a memory and permits said entries of said viewers when there is a match, at a time of accepting said entries through said second interface.

7. The prize contest system according to claim 4, **characterized in that** said second interface is capable of allowing entries for those prizes whose entry acceptance periods have not expired yet.

8. The prize contest system according to claim 5, **characterized in that** said computer (4) has capabilities of:
allowing entrants to input identification information and verifying said identification information;
managing service points entrant by entrant; and
giving different service points to entrants between a case where entries are made through said first interface and a case where entries are made through said second interface.

9. The prize contest system according to claim 1, **characterized in that** said computer (4) has capabilities of:
storing quiz information including question data and correct answer data for a quiz about a sponsor of prizes in said database (5A, 5B, 5C and 5D);
replying to an each entry of a prize contest made from a terminal (2) and outputting said question data in said quiz information on said sponsor of said prizes to which said entry has been made;
receiving a reply to said question data from said terminal (2); and
comparing said received reply with the correct answer data of the quiz information, and accepting the entry from said terminal (2) if it is determined that said received replay indicates the correct answer.

10. The prize contest system according to claim 9, **characterized in that** said computer (4) has capabilities of supplying information on said sponsor of said prizes including a hint about said quiz to said terminal (2) in at least one of a case where said reply received from said terminal (2) is requesting for a hint and a case where an answer received from said terminal (2) is determined as incorrect through comparison of said answer with said correct answer in said quiz information.

11. The prize contest system according to claim 1, **characterized in that** said prize information further includes address information on an address of a sponsor of prizes; and
said computer (4) has capabilities of:
acquiring information on an address of each entrant; and
extracting prize information based on said address of said entrant and outputting said prize-contest information using said extracted prize information.

12. The prize contest system according to claim 1, **characterized in that** said computer (4) has capabilities of:
storing entrant information on each entrant in said database (5A, 5B, 5C and 5D); and
determining whether or not said entrant has made an entry so far, and, when said entrant has made an entry, reading said entrant information of said entrant from said database and using said read entrant information in inputting necessary information for a current entry.

13. The prize contest system according to claim 1, **characterized in that** said computer (4) has capabilities of
storing information on advertisements about advertisers in said database (5A, 5B, 5C and 5D); and
supplying information on that advertisement of an advertiser which has been designated by a user in response to a request for said advertisement from a terminal and giving a predetermined number of points to said user.

14. The prize contest system according to claim 10, **characterized in that** said computer (4) supplies said terminal that has made said request with said information on said advertisement of said advertiser that has been designated by said user, together with information on a quiz about said advertisement.

15. A prize-contest information presenting method which is executed by a computer (4) connected to a network (1) and comprises the steps of:
storing prize information on prizes;
setting entry acceptance periods for said prizes;
storing advertisement information on sponsors of said prizes in association with said prize information; and
presenting prize-contest information using said prize information, said advertisement information and information on said entry acceptance periods in response to a request received over said network (1).

16. A computer (4) connected to a network (1) and a database (5A, 5B, 5C and 5D) and having capabilities of:
storing prize information on prizes in a database (5A, 5B, 5C and 5D);
setting entry acceptance periods for said prizes;
storing advertisement information on sponsors of said prizes in said database (5A, 5B, 5C and 5D) in association with said prize information; and
presenting prize-contest information using said prize information, said advertisement information and information on said entry acceptance periods in response to a request received from a terminal (2) over said network (1).

17. A computer readable recording medium having a program recorded therein, which executes the steps of:
storing prize information on prizes in a database (5A, 5B, 5C and 5D);
setting entry acceptance periods for said prizes;
storing advertisement information on sponsors of said prizes in said database (5A, 5B, 5C and 5D) in association with said prize information; and
presenting prize-contest information using said prize information, said advertisement information and information on said entry acceptance periods in response to a request received from a terminal (2) over said network (1).

18. A program signal superimposed on a carrier wave and having:
a segment which stores prize information on prizes in a database (5A, 5B, 5C and 5D);
a segment which sets entry acceptance periods for said prizes;
a segment which stores advertisement information on sponsors of said prizes in said database (5A, 5B, 5C and 5D) in association with said prize information; and
a segment which presents prize-contest information using said prize information, said advertisement information and information on said entry acceptance periods in response to a request received from a terminal (2) over said network (1).
